# EUROPÄISCHE PATENTSCHRIFT

(11) **EP 2 050 610 B1**
(45) Veröffentlichungstag und Bekanntmachung des Hinweises auf die Patenterteilung: **18.04.2012**
(21) Anmeldenummer: 08015508.8
(22) Anmeldetag: 03.09.2008
(51) Int. Cl.: B60K 35/00, B60K 37/00

(54) **Kraftfahrzeug**
Motor vehicle
Véhicule automobile

(30) Priorität: 17.10.2007 DE 102007049638
(43) Veröffentlichungstag der Anmeldung: 22.04.2009
(73) Patentinhaber: Audi AG, 85045 Ingolstadt (DE)
(72) Erfinder: Sacher, Heike, 82194 Gröbenzell (DE); Zhou, Zhiliang, 85764 Oberschleissheim (DE); Rivera Roldán, Jorge Orlando, 85748 Garching (DE)
(74) Vertreter: Thielmann, Frank

(56) Entgegenhaltungen:
- WO-A-2005/055046
- DE-A1- 10 052 654
- DE-A1- 10 144 752
- DE-A1- 10 343 683

## Beschreibung

Die Erfindung betrifft ein Kraftfahrzeug umfassend eine Anzeigevorrichtung zur optischen Darstellung von Informationen zu oder von fahrzeugseitigen Betriebssystemen, sowie eine Einrichtung zur Ermittlung von eine befahrene Straße klassifizierenden Daten.

Bekannte Kraftfahrzeuge verfügen über eine Vielzahl fahrzeugseitig vorgesehene Betriebssysteme, die entweder selbständig Informationen generieren, oder zu denen Informationen existieren, wobei zumindest ein Teil dieser verschiedenartigen Informationen über eine optische Anzeigevorrichtung, üblicherweise ein Display, z.B. ein LCD-Display, dargestellt werden. Zu nennen sind hierunter vor allem Fahrerassistenzsysteme wie ein Navigationssystem, ein Längsführungssystem (ACC-System, ACC = adaptive cruise control), ein Autotelefon, ein Infotainment-System mit Radio und gegebenenfalls CD-Spieler, ein System zur Erfassung und Wiedergabe von Verkehrsinformationen, oder verschiedene Fahrzeugeinstellungen erlaubende Betriebssysteme wie pneumatische Federung etc. Die Darstellungsweise ist häufig derart strukturiert, dass ein systemspezifisches Hauptmenü dargestellt werden kann, in dem ein oder mehrere Untermenüs anwählbar sind, wobei über ein geeignetes Eingabeelement innerhalb der einzelnen Menüebenen navigiert und gewählt werden kann. Die Art der Darstellung kann sowohl in Form reinen Textes, in Form von Piktogrammen oder sonstigen Bildern, oder im Falle eines Navigationssystems auch in Form einer Kartendarstellung erfolgen. Die jeweilige Darstellung ist invariant, das heißt, das was dargestellt wird, und wie es dargestellt wird, ist fest vorgegeben und kann benutzerseitig nicht beeinflusst werden, ausgenommen die Möglichkeit, den kartographischen Maßstab im Falle einer Kartendarstellung bei Betrieb des Navigations-systems verändern zu können.

Wenngleich über die Anzeigevorrichtung in für den Fahrer vorteilhafter Weise eine Vielzahl von Informationen darstellbar sind, besteht mitunter jedoch das Problem, dass die im Moment angezeigten Informationen entweder situationsbedingt nicht hilfreich sind bzw. vom Fahrer nicht benötigt werden, zum anderen ist mitunter der Informationsinhalt oder die Informationsmenge der momentanen Situation nicht entsprechend gestaltet, das heißt, dass mitunter zu viele oder falsche bzw. nicht benötigte Informationen angezeigt werden, die der Fahrer, der sich beispielsweise aufgrund einer Autobahnfahrt besonders konzentrieren muss, bei Blick auf die Anzeigevorrichtung nicht erfassen kann bzw. überhaupt nicht benötigt.

Ferner sind Kraftfahrzeuge bekannt, die über eine Einrichtung zur Ermittlung von eine befahrene Straße klassifizierenden Daten aufweisen. Im einfachsten Fall kann es sich hierbei bereits um das Navigationssystem handeln, da auch dieses in Verbindung mit der Daten-CD- oder -DVD in der Lage ist, zu erkennen, ob es sich bei der befahrenen Straße um eine Autobahn, eine Landstraße oder eine Straße in der Stadt handelt. Darüber hinaus ist es aber auch bekannt, anhand des Betriebs des eigenen Kraftfahrzeugs zu ermitteln, welche Art die befahrene Straße ist, beispielsweise anhand der Ist-Geschwindigkeit, der Anzahl etwaiger Lenkbewegungen sowie der Lenkwinkelintervalle etc. Derartige Einrichtungen sind durch DE 10 343 683 und DE 100 52 654 bekannt.

Der Erfindung liegt damit das Problem zugrunde, ein Kraftfahrzeug anzugeben, das eine verbesserte Informationsdarstellung ermöglicht.

Zur Lösung dieses Problems ist bei einem Kraftfahrzeug der eingangs genannten Art erfindungsgemäß vorgesehen, dass die Art und/oder die Menge und/oder die Darstellungsform und/oder der Inhalt der angezeigten Informationen in Abhängigkeit der die befahrene Straße klassifizierenden Daten veränderbar ist, wobei als klassifizierende Daten die Durchschnittsgeschwindigkeit des Kraftfarzeugs verwendet wird.

Beim erfindungsgemäßen Kraftfahrzeug wird die bisher im Stand der Technik gegebene, starre und fest vorgegebene Darstellung der Informationen aufgelöst und demgegenüber eine veränderbare Informationsdarstellung ermöglicht, wobei die Veränderung der Darstellungsform in Abhängigkeit der erfassten, die befahrene Straße klassifizierenden Daten erfolgt. Das heißt, die Informationsdarstellung kann in Abhängigkeit der befahrenen Straße variieren, so dass quasi straßentypenabhängig das darzustellende Informationspaket gebildet wird. Die Informationsdarstellung kann in jeder Richtung verändert werden. Es besteht die Möglichkeit, die Art der angezeigten Informationen abhängig von dem befahrenen Straßentyp zu verändern. Beispielsweise können bei einer Autobahnfahrt nur wenige ausgewählte, wichtige und zentrale Informationen dargestellt werden, statt aller sonst üblicherweise in dem vom Fahrer angewählten Menü angezeigten Informationen. Gleichermaßen können hierbei auch Informationen "gemischt" dargestellt werden, also Informationen, die zu verschiedenen Betriebssystemen gehören, die ansonsten getrennt, also in separaten Menüs dargestellt werden, jedoch beispielsweise bei einer Autobahnfahrt für den Fahrer zweckmäßigerweise gemeinsam dargestellt werden, ohne dass er hierfür einen Menüwechsel vornehmen muss oder separate Menüs anwählen muss.

Ferner kann die Menge der angezeigten Informationen geändert werden. Während beispielsweise bei langsamer Fahrt in der Stadt oder über Land pro Bildschirmseite mehr Informationen dargestellt werden können, weil der Fahrer anzunehmenderweise mehr Zeit hat, sich der Anzeigevorrichtung zu widmen und Informationen zu erfassen, können bei einer Autobahnfahrt weniger Informationen dargestellt werden, mithin also die Informationsmenge reduziert werden.

Weiterhin kann die Darstellungsform der angezeigten Informationen variieren, das heißt, es kann beispielsweise die Schriftgröße verändert werden, um wichtige Informationen hervorzuheben und diese deutlicher und leicht erfassbar zu machen, damit beispielsweise bei einer Autobahnfahrt die zentralen Informationen bei auch kurzem Blick auf die Anzeigevorrichtung sofort ins Auge fallen. Auch eine farbliche Veränderung der Darstellungsform ist möglich, beispielsweise können wichtige, zentrale Informationen anstelle in weißer Schrift dann in auffällig roter Schrift gezeigt werden, etc.

Schließlich besteht die Möglichkeit, den Inhalt der angezeigten Informationen zu ändern. Hierunter ist es möglich, statt längerer Textinformationen diese nur auf Schlagwörter zu verkürzen, was dann, wenn der Fahrer stark beansprucht ist, wiederum eine leichtere Erfassung ermöglicht.

Insgesamt lässt das erfindungsgemäße Kraftfahrzeug mit besonderem Vorteil eine Variation der Informationsdarstellung zu, so dass dem Fahrer abhängig von dem Typ der befahrenen Straße individuell aufbereitete Informationen dargestellt werden.

An der Anzeigevorrichtung selbst sind verschiedene unterschiedlichen Betriebssystemen zugeordnete anwählbare Menuicons oder Haupt- oder Untermenüs, wobei jedes Menüicon ein Hauptmenü und jedes Hauptmenü wenigstens ein Untermenü umfasst, anzeigbar, wobei das dargestellte Menüicon oder Haupt- oder Untermenü, gegebenenfalls nach vorheriger Aktivierung eines zugeordneten Betriebssystems, in Abhängigkeit der klassifizierenden Daten gewählt wird. Ein Menüicon ist über ein geeignetes Bedienelement anwählbar, sofern nicht zum Anwählen des zugeordneten Betriebssystems, beispielsweise des Navigationssystems oder des Autotelefons, von Haus aus separate Anwahltasten vorgesehen sind. In jedem Fall ist eine Menüstrukturierung vorgesehen. Je nachdem, welcher Art nun die befahrene Straße ist, variiert die Darstellung. Wird beispielsweise über eine entsprechende Taste das Navigationssystem angewählt, so kann, wenn die befahrene Straße als Stadtstraße erkannt wird, beispielsweise die Hauptmenüseite dargestellt werden, auf welcher die Eingabe eines Fahrtziel möglich ist. Dies kann gleichzeitig mit einer Darstellung der letzten angefahrenen Ziele in einem entsprechenden Displayabschnitt erfolgen, nachdem häufig ein kurz zuvor angefahrenes Ziel erneut angefahren werden soll. Das heißt, dass hierbei Informationen aus zwei unterschiedlichen Menüebenen zusammengeführt werden, zum einen ein Teil des Hauptmenüs, nämlich die Zieleingabe, zum anderen ein Teil eines Untermenüs mit den letztmals angefahrenen Zielen. Diese Darstellungsvariation setzt beispielsweise wie beschrieben voraus, dass zuvor das Navigationssystem über Tastendruck oder dergleichen aktiviert wurde. Falls dem nicht so ist, könnte bei Erfassung einer Stadtfahrt beispielsweise defaultmäßig die Kartendarstellung der Umgebung erfolgen, unabhängig davon, ob zuvor das Navigationssystem eben aktiviert wurde. Wird beispielsweise das Navigationssystem bei einer Landstraßen- oder Autobahnfahrt angewählt, nachdem das Navigationssystem zu einem früheren Zeitpunkt bereits aktiviert wurde und in Betrieb ist und zu einem gewählten Fahrtziel navigiert, so wäre es bei erneuter Anwahl denkbar, sogleich das Untermenü mit der Möglichkeit zur Veränderung der Routenkriterien darzustellen, gegebenenfalls gekoppelt mit der Darstellung aktueller Verkehrsmeldungen in einem weiteren Displayabschnitt. Diese Darstellungsmöglichkeit geht von der Überlegung aus, dass ein Fahrer, der eine Landstraße befährt und erneut das vormals aktivierte und noch aktive Navigationssystem anwählt, voraussichtlich eine Veränderung der Routenkriterien vornehmen möchte. Dem Fahrer wird also hier wiederum eine vom Straßentyp abhängige Informationsdarstellung geboten, die individuell aufbereitet ist.

Wie bereits beschrieben, besteht grundsätzlich die Möglichkeit, in Abhängigkeit der klassifizierenden Daten gleichzeitig die Menüicons oder Haupt- oder Untermenüs oder aus diesen ausgewählte Menüpunkte, seien es anwählbare Menüpunkte oder reine Informationspunkte, zweier oder mehr Menüs anzuzeigen. Beispielsweise besteht die Möglichkeit, im Falle einer Autobahnfahrt stets mehrere Menüicons anderer Betriebssysteme am Display darzustellen, auch wenn die Hauptdarstellung eines Menüs eines anderes Betriebssystems erfolgt. Es ermöglicht es dem Fahrer, unmittelbar ein Menü eines anderen Betriebssystems aufzurufen, um am Bildschirm quasi "zurückzublättern", bis er zu dem Basismenü gelangt, innerhalb dem, sofern dies am Bildschirm erfolgt, die einzelnen Hauptmenüs der Betriebssysteme angewählt werden können. Vor allem bei Verwendung eines Touchscreens ist dies von Vorteil, als unmittelbar von einem Hauptmenü eines Betriebssystems in ein anderes Hauptmenü gesprungen werden kann, bzw. dort direkt in ein Untermenü, wenn dieses nach dem gerade befahrenen Straßentyp angezeigt werden soll. Denkbar ist es beispielsweise, wenn das Navigationssystem aktiv ist und an der Anzeigevorrichtung, also dem LCD-Bildschirm, die Straßenkarte angezeigt wird, in einem zweiten Anzeigebereich Informationen zum ACC-System darzustellen, oder zumindest das ACC-Menüicon, so dass der Fahrer trotz aktivem Navigationssystem direkt am Bildschirm unmittelbar in das ACC-Menü wechseln kann, was über ein geeignetes Bedienelement, beispielsweise einem Drehknopf oder einem Joystick, möglich ist, um dann in diesem Menü direkt die Einstellungen vorzunehmen bzw. dieses unmittelbar aufzurufen.

Wie bereits beschrieben, besteht eine grundsätzliche Möglichkeit, die Darstellungsform angezeigter Informationen abhängig vom befahrenen Straßentyp zu variieren. Denkbar ist dabei, die Größe und/oder Farbdarstellung dargestellter Schriftzeichen oder dargestellter Symbole wie etwaiger Piktogramme oder sonstiger beliebiger geometrischer Darstellungen zu verändern.

Weitere Vorteile, Merkmale und Einzelheiten der Erfindung ergeben sich aus dem im folgenden beschriebenen Ausführungsbeispiel sowie anhand der Zeichnungen. Dabei zeigen:
- Fig. 1: eine Prinzipdarstellung eines erfindungsgemäßen Kraftfahrzeugs, und
- Fig. 2: eine Prinzipdarstellung einer Autofahrt, bei der unterschiedliche Straßen befahren und unterschiedliche Betriebssysteme angewählt werden, sowie entsprechende Bildschirmdarstellungen.

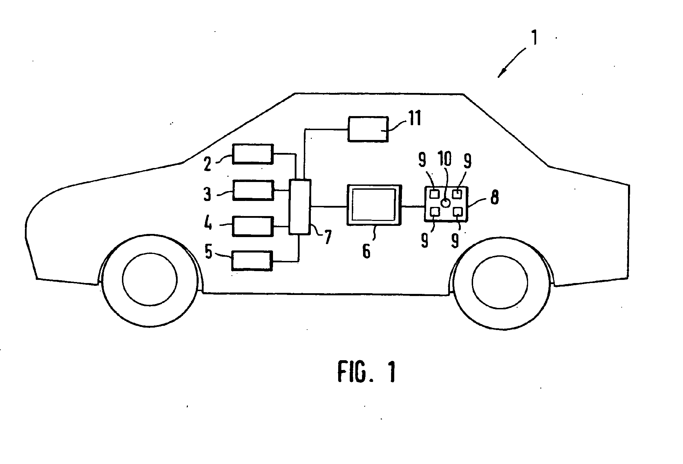

Fig. 1 zeigt ein erfindungsgemäßes Kraftfahrzeug 1, umfassend mehrere Betriebssysteme 2, 3, 4, 5, denen eine Anzeigevorrichtung 6, beispielsweise ein LCD-Bildschirm, zugeordnet ist, an dem von diesen Betriebssystemen generierte oder diesen zugeordnete Informationen dargestellt werden können. Bei dem Betriebssystem 2 kann es sich beispielsweise um das Navigationssystem handeln, bei dem Betriebssystem 3 um das ACC-System, bei dem Betriebssystem 4 beispielsweise um das Autotelefon, und beim Betriebssystem 5 um das Infotainmentsystem, also Radio/CD. Die Betriebssysteme 2 - 5 kommunizieren mit einer gemeinsamen Steuerungseinrichtung 7, die die Bilddarstellung steuert. An der Anzeigevorrichtung 6 sind die Informationen in Form von Menüicons oder Haupt- und Untermenüseiten darstellbar, die jeweils bzw. deren Menüpunkte über geeignete Bedienelemente anwählbar sind, sofern es sich um mit entsprechenden Funktionen belegte lcons oder Menüpunkte handelt, und nicht nur um reine Informationsdarstellungen. Hierzu ist eine Bedieneinrichtung 8 umfassend im gezeigten Beispiel mehrere Tasten 9, von denen beispielsweise jeweils eine einem der Betriebssysteme 2 - 5 zugeordnet ist, um diese anzuwählen, sowie einen mittigen Dreh-Druckschalter 10, über den am Bildschirm navigiert, also ein Cursor oder dergleichen, bewegt werden kann.

Ferner ist eine Einrichtung 11 vorgesehen, mittels der es möglich ist, Daten zu erfassen bzw. zu erzeugen, anhand derer die Klassifikation des Typs der befahrenen Straße möglich ist, die also eine Aussage darüber ermöglichen, ob die befahrene Straße eine Stadtstraße, eine Landstraße oder eine Autobahn ist. Die Einrichtung 11 kommuniziert mit weiteren, hier nicht näher gezeigten Betriebssystemen oder Bedienelementen des Kraftfahrzeugs, insbesondere werden Informationen hinsichtlich der Ist-Geschwindigkeit, die von der Geschwindigkeitsanzeige abgegriffen werden können, hinsichtlich der Lenkradbewegung bzw. Lenkwinkelveränderung, die über das Lenkrad abgegriffen werden können, sowie beispielsweise über die Bremspedalbetätigung, die am Bremspedal abgegriffen werden können, erfasst. Die genannten, erfassten Betriebsparameter sind lediglich exemplarisch, es können selbstverständlich andere bzw. weitere Parameter erfasst werden, anhand welcher die entsprechenden Daten zur Bestimmung des Straßentyps abgeleitet werden können bzw. die entsprechende derartige Daten liefern.

Eine Straßentypklassifizierung kann beispielsweise gemäß folgendem Schema erfolgen:

| Straßentyp | Klassifizierende Daten |
|---|---|
| Stau bzw. stockender -Verkehr | - Durchschnittsgeschwindigkeit kleiner 10 km/h |
| Stadtstraße | - Durchschnittsgeschwindigkeit 10 - 60 km/h |
| Kurvige Landstraße | - Durchschnittsgeschwindigkeit 60 - 110 km/h - Häufigkeit Lenkradwinkelveränderung größer 10° mehr als siebenmal pro Minute |
| Gerade Landstraße | - Durchschnittsgeschwindigkeit 60 - 110 km/h - Häufigkeit Lenkradwinkelveränderung größer 10° weniger als siebenmal pro Minute |
| Autobahn | - Durchschnittsgeschwindigkeit 110 - 200 km/h |

Die Berechnung der Durchschnittsgeschwindigkeit kann kontinuierlich erfolgen, oder in Abhängigkeit des Erreichens eines vorgegebenen Lenkraddrehwinkels, z.B. von 45°. Hierbei wird die Durchschnittsgeschwindigkeit erst dann berechnet, wenn der Lenkradwinkel z.B. die genannten 45° überschritten hat, bis zu dem Zeitpunkt, an dem der Lenkradwinkel erneut 45° überschritten hat. Danach beginnt ein neuer Abschnitt für die Berechnung der Durchschnittsgeschwindigkeit. Die Berechnungsdauer wird also über den Lenkwinkel bestimmt.

Anhand dieser wenigen Informationen lässt sich hinreichend zuverlässig ermitteln, welchen Typs die befahrene Straße ist, wobei, wie die Tabelle zeigt, hierüber nicht nur der Straßentyp bestimmt werden kann, sondern letztlich auch die Verkehrssituation, nachdem auch ein Stau bzw. stockender Verkehr, unabhängig vom Straßentyp, erfasst werden kann.

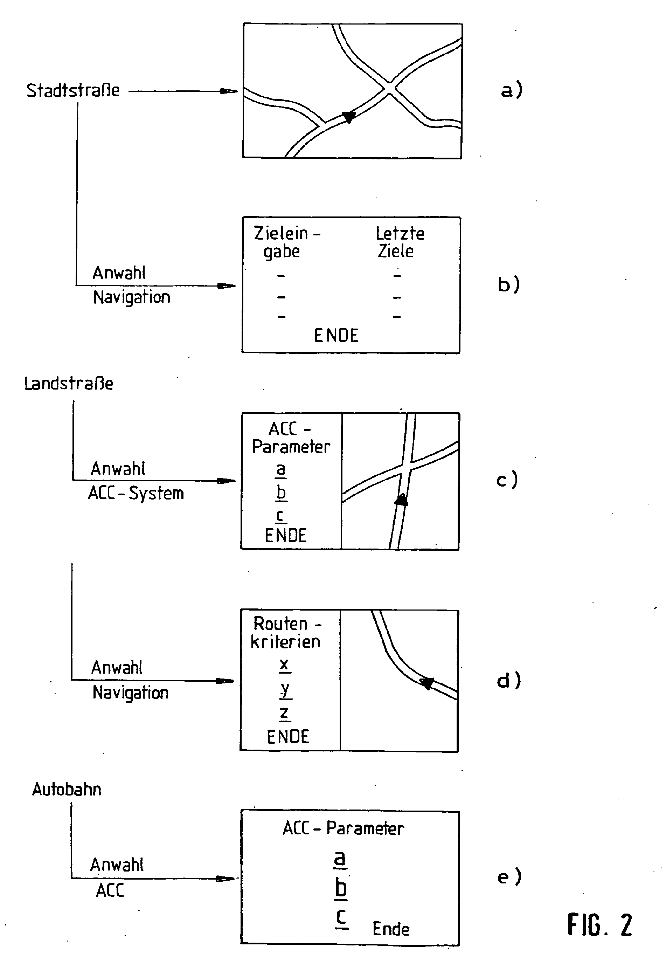

Erfindungsgemäß kann nun die Informationsdarstellung an der Anzeigevorrichtung 6 in Abhängigkeit des erfassten Straßentyps variiert werden. Fig. 2 zeigt hierzu ein Beispiel.

Es sei angenommen, dass eine Stadtfahrt gegeben ist, es wird also eine Stadtstraße erkannt, nachdem die Durchschnittsgeschwindigkeit im Bereich zwischen 10 - 60 km/h liegt. Bei Erfassung einer Stadtstraße bzw. unmittelbar mit Beginn der Fahrt kann beispielsweise an der Anzeigevorrichtung 6 defaultmäßig eine Straßenkarte dargestellt werden, wie im ersten Darstellungsbeispiel in Fig. 2 oben gezeigt. Es wird hier die gesamte Bildschirmfläche ausgenutzt, um die Straßenkarte, wie in a) gezeigt, darzustellen. Der Fahrer sieht folglich, wo er sich befindet, was durch den dreieckigen Cursor dargestellt ist, und wie der folgende Straßenverlauf ist.

Nach Aufnahme der Fahrt wird als eines der Betriebssysteme das Navigationssystem angewählt, beispielsweise durch Drücken der zugeordneten Taste 9.

Unmittelbar mit Anwahl des Navigationssystem ändert sich die Bildschirmdarstellung, wie Fig. 2 in der Bilddarstellung b) zeigt. Es ist nunmehr in der linken Bildschirmhälfte die Möglichkeit gegeben, eine Zieleingabe vorzunehmen, während in der rechten Hälfte die zuletzt angefahrenen Ziele angegeben werden. Der Fahrer hat nun die Möglichkeit, entweder die zuletzt angefahrenen Ziele anzuwählen und dort eines auszuwählen, das dann automatisch als Zieleingabe verwendet wird. Alternativ kann er auch die Zieleingabe anwählen, wo nach beispielsweise in der rechten Bildschirmhälfte die Darstellung "letzte Ziele" ersetzt wird durch eine Möglichkeit, Buchstaben anzuwählen, um das Ziel zu definieren. Über die dargestellte "ENDE"-Anwahlmöglichkeit kann das jeweilige Menü wieder verlassen werden. Ist also die Zieleingabe erfolgt, wählt der Fahrer vorzugsweise über den Dreh-Druckknopf 10 die "ENDE"-Funktion, wonach die Zielführung aktiviert ist. Die Bildschirmdarstellung kehrt beispielsweise wieder zur Kartendarstellung zurück.

Mit Fortsetzung der Fahrt ändert sich der Straßentyp, der Fahrer befährt eine Landstraße, wie im Übergang zur Bildschirmdarstellung c) dargestellt ist. Die Landstraße wird durch die höhere Durchschnittsgeschwindigkeit definiert. Während der Landstraßenfahrt wird beispielsweise das ACC-System durch Drücken des entsprechenden zugeordneten Bedienknopfs 9 angewählt. Die vormalige Bildschirmdarstellung mit der vollflächigen Straßenkarte ändert sich nun, wie in Fig. 2 im Teil c) dargestellt ist. In der rechten Bildschirmhälfte ist nach wie vor die Karte, wenngleich im verkleinerten Ausschnitt, gezeigt, nachdem das Navigationssystem nach wie vor aktiv ist. In der linken Bildschirmhälfte sind Systemparameter des ACC-Systems wählbar, die hier mit a), b) und c) dargestellt sind. Der Fahrer kann nun, beispielsweise über den Dreh-Druckknopf 10, die entsprechenden ACC-Parameter einstellen und über die "ENDE"-Funktion nach endgültiger Aktivierung des ACC-Systems das ACC-Menü wieder verlassen.

Der Fahrer setzt nun seine Fahrt fort, es sind sowohl das Navigationssystem als auch das ACC-System aktiviert. Zu einem späteren Zeitpunkt wählt der Fahrer erneut das Navigationssystem an, die Bildschirmdarstellung ändert sich erneut, siehe die Darstellung gemäß d) in Fig. 2. Auch hier bleibt in der rechten Bildschirmhälfte die Kartendarstellung, wenngleich verkleinert, erhalten. Bei Anwahl des Navigationssystems während der Landstraßenfahrt wird dem Fahrer nun jedoch nicht erneut eine Zieleingabemöglichkeit angeboten, sondern gleich das Untermenü zur Einstellung etwaiger Routenkriterien. Denn es ist davon auszugehen, dass der Fahrer nach wie vor zum zuvor eingegebenen Ziel gelangen möchte, jedoch möglicherweise eine andere Fahrtstrecke wählen möchte, beispielsweise möchte er Autobahnfahrten vermeiden etc., weil sich möglicherweise dort, wie über das Radio erfahren, ein Stau gebildet hat etc. Auf jeden Fall kann der Fahrer nun unmittelbar am Bildschirm 6 entsprechende Routenkriterien, dargestellt durch x, y und z, anwählen und einstellen. Nach Einstellen der Routenkriterien kann der Fahrer erneut über die "ENDE"-Funktion dieses Untermenü verlassen, er gelangt dann beispielsweise wiederum zur Kartendarstellung.

Es sei nun angenommen, dass der Fahrer seine Fahrt fortsetzt und auf eine Autobahn auffährt. Dieser Wechsel des Straßentyps wird erneut über die entsprechend erfassten Daten von der Einrichtung 11 erkannt. Der Wechsel des Straßentyps hat nun, wie bereits beim Wechsel von der Stadtstraße auf die Landstraße, Auswirkung auf die Bildschirmdarstellung. Wie Fig. 2 im Teil e) zeigt, wählt der Fahrer nun, nachdem er auf der Autobahn ist, erneut das ACC-System an, da er die eingestellten ACC-Parameter ändern möchte. Wie im Teil e) darstellt ist, erfolgt nun - anders als im Bildteil c) - eine andere Darstellung des ACC-Untermenüs. Es wird hier für die Dauer der ACC-Parameterwahl nicht mehr in einen Bildschirmabschnitt die Straßenkarte dargestellt, vielmehr wird der gesamte Bildschirm zur Darstellung der ACC-Parameter genutzt. Auch ändert sich hier nicht nur die Menge der dargestellten Informationen (es werden weniger Informationen dargestellt als in der Darstellung gemäß c), nachdem die Straßenkarte nicht mehr gezeigt wird), sondern auch die Darstellungsform. Denn die anwählbaren ACC-Parameter a, b und c werden von der Schriftgröße her deutlich größer gezeigt, um dem Fahrer die Erfassung zu erleichtern. Auch ist es denkbar, diese von der Darstellungsfarbe her hervorhoben anzuzeigen. Der Fahrer, der bei der Autobahnfahrt sehr konzentriert fahren muss, hat also so die Möglichkeit, sich nur auf die Einstellung der ACC-Parameter konzentrieren zu müssen, die er auch bei relativ kurzem Blick auf den Bildschirm 6 sofort erkennen kann. Nach Einstellung der ACC-Parameter kann der Fahrer wieder über die "ENDE"-Funktion in das ursprüngliche Darstellungsmenü zurückkehren, in dem ihm, nachdem das Navigationssystem nach wie vor aktiviert ist, beispielsweise wiederum vollflächig die Straßenkarte dargestellt wird.

Das dargestellte Beispiel ist lediglich exemplarischer Natur und keinesfalls in irgendeiner Form beschränkend. Vielmehr sind beliebige Darstellungsvariationen möglich, wobei die jeweilige Darstellung zum jeweils angewählten Betriebssystem vom jeweils befahrenen Straßentyp abhängt. Die Informationsdarstellungsveränderbarkeit ist grundsätzlich zu den Informationen zu dem Betriebssystem in 2 - 4, also dem Navigationssystem, dem ACC-System und dem Autotelefon, gegeben. Die Bedienung des Betriebssystems 5, im beschriebenen Beispiel des Infotainment-Systems mit Radiobedienung und CD-Bedienung, bleibt unverändert, das heißt, die Informationsdarstellung erfolgt hier über alle Straßentypen hinweg gleichartig.

## Patentansprüche

1. Kraftfahrzeug (1) umfassend eine Anzeigevorrichtung (6) zur optischen Darstellung von Informationen zu oder von fahrzeugseitigen Betriebssystemen (2, 3, 4, 5), sowie eine Einrichtung (11) zur Ermittlung von eine befahrene Straße klassifizierenden Daten, wobei die Art und/oder die Menge und/oder die Darstellungsform und/oder der Inhalt der angezeigten Informationen in Abhängigkeit der die befahrene Straße klassifizierenden Daten veränderbar ist,
**dadurch gekennzeichnet,**
**dass** als klassifizierende Daten die Durchschnittsgeschwindigkeit des Kraftfahrzeugs verwendet wird.

2. Kraftfahrzeug nach Anspruch 1,
**dadurch gekennzeichnet,**
**dass** an der Anzeigevorrichtung (6) verschiedene unterschiedlichen Betriebssystemen zugeordnete anwählbare Menüicons oder Haupt- oder Untermenüs, wobei jedes Menüicon ein Hauptmenü und jedes Hauptmenü wenigstens ein Untermenü umfasst, anzeigbar sind, wobei das dargestellte Menüicon oder Haupt- oder Untermenü, gegebenenfalls nach vorheriger Aktivierung eines zugeordneten Betriebssystems (2, 3, 4, 5), in Abhängigkeit der klassifizierenden Daten gewählt wird.

3. Kraftfahrzeug nach Anspruch 1 oder 2,
**dadurch gekennzeichnet,**
**dass** in Abhängigkeit der klassifizierenden Daten gleichzeitig die Menüicons oder Haupt- oder ein Untermenüs oder aus diesen ausgewählte Menüpunkte zweier oder mehr Menüs anzeigbar sind.

4. Kraftfahrzeug nach einem der vorangehenden Ansprüche,
**dadurch gekennzeichnet,**
**dass** in Abhängigkeit der klassifizierenden Daten die Größe und/oder Farbdarstellung dargestellter Schriftzeichen oder dargestellter Symbole veränderbar ist.

## Claims

1. Motor vehicle (1) comprising a display apparatus (6) for the visual presentation of information relating to or from vehicle operating systems (2, 3, 4, 5), and a device (11) for ascertaining data which classify a road which is being used, wherein the type and/or volume and/or form of presentation and/or content of the displayed information can be altered on the basis of the data which classify the road which is being used,
**characterized**
**in that** the classifying data used are the average speed of the motor vehicle.

2. Motor vehicle according to Claim 1,
**characterized**
**in that** the display apparatus (6) can be used to display various selectable menu icons or main or submenus which are associated with different operating systems, wherein each menu icon comprises a main menu and each main menu comprises at least one submenu, wherein the presented menu icon or main or submenu is chosen, possibly following prior activation of an associated operating system (2, 3, 4, 5), on the basis of the classifying data.

3. Motor vehicle according to Claim 1 or 2,
**characterized**
**in that** the classifying data can be taken as a basis for simultaneously displaying the menu icons or main or submenus or menu items selected from these on two or more menus.

4. Motor vehicle according to one of the preceding claims,
**characterized**
**in that** the classifying data can be taken as a basis for altering the size and/or colour presentation of presented characters or presented symbols.

## Revendications

1. Véhicule automobile (1) comprenant un dispositif d'affichage (6) pour la représentation optique d'informations vers des systèmes ou en provenance de systèmes d'exploitation (2, 3, 4, 5) du côté véhicule, ainsi qu'un appareillage (11) pour la détermination de données de classification d'une route fréquentée, la nature et/ou la quantité et/ou la forme de représentation et/ou le contenu des informations affichées étant modifiable en fonction des données de classification de la route fréquentée,
**caractérisé en ce qu'**on utilise la vitesse moyenne du véhicule automobile comme données de classification.

2. Véhicule automobile selon la revendication 1,
**caractérisé en ce que** le dispositif d'affichage (6) permet d'afficher différentes icones de menus sélectionnables ou des menus principaux ou sous-menus associés à divers systèmes d'exploitation, chaque icône de menu comprenant un menu principal et chaque menu principal comprenant au moins un sous-menu, l'icône de menu représentée ou de menus principaux ou sous-menus étant sélectionnée en fonction des données de classification, après activation préalable éventuelle d'un système d'exploitation associé (2, 3, 4, 5).

3. Véhicule automobile selon la revendication 1 ou 2,
**caractérisé en ce qu'**en fonction des données de classification, il est possible d'afficher simultanément les icones de menus ou des menus principaux ou un sous-menu ou deux ou plusieurs menus sélectionnés à partir de ces points de menus.

4. Véhicule automobile selon une des revendications précédentes,
**caractérisé en ce qu'**en fonction des données de classification, il est possible de modifier la taille et/ou la représentation en couleurs de caractères représentés ou de symboles représentés.
